# NOUVEAU FASCICULE DE BREVET EUROPEEN

(11) **EP 3 307 991 B2**
(45) Date de publication et mention de la décision concernant l'opposition: **04.12.2024**
(45) Mention de la délivrance du brevet: 29.05.2019
(21) Numéro de dépôt: 16735912.4
(22) Date de dépôt: 10.06.2016
(51) Int. Cl.: F01D 25/16, F02K 1/04, F02K 1/38, F02K 1/48, F02K 1/80

(54) **ENSEMBLE A CARTER D'ECHAPPEMENT ET PIECE AVAL DE REVOLUTION**
ANORDNUNG MIT EINEM ABGASGEHÄUSE UND EINEM NACHGESCHALTETEN ROTATIONSSYMMETRISCHEN TEIL
ASSEMBLY COMPRISING AN EXHAUST CASE AND A DOWNSTREAM ROTATIONALLY SYMMETRICAL PART

(30) Priorité: 11.06.2015 FR 1555331
(43) Date de publication de la demande: 18.04.2018
(73) Titulaire: Safran Aircraft Engines, 75015 Paris (FR)
(72) Inventeur: DE SOUSA, Mario, César, 77550 Moissy-Cramayel (FR); DEBRAY, Benoit, Argémiro, Matthieu, 77550 Moissy-Cramayel (FR); FOUQUET, Dominique, Michel, 77550 Moissy-Cramayel (FR); GHOSAROSSIAN-PRILLIEUX, Gregory, 77550 Moissy-Cramayel (FR); NOEL, Frédéric, 77550 Moissy-Cramayel (FR)
(74) Mandataire: Regimbeau
(86) Numéro de dépôt international: PCT/FR2016/051415
(87) Numéro de publication internationale: WO 2016/198806

(56) Documents cités:
- WO-A1-2013/163510
- FR-A1- 2 978 989
- US-A1- 2014 053 563

## Description

### DOMAINE DE L'INVENTION

L'invention concerne un ensemble de turbomachine comprenant un carter d'échappement et une pièce aval annulaire pouvant être un mélangeur ou une tuyère d'échappement, ou encore un cône d'échappement.

### ETAT DE LA TECHNIQUE

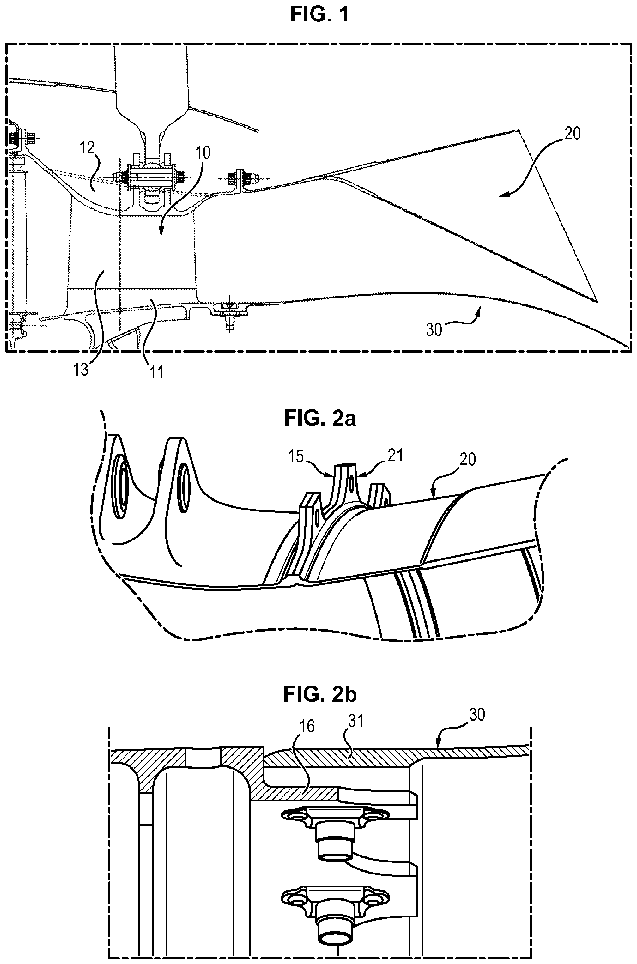

On a représenté sur la figure 1 un exemple d'ensemble de turbomachine connu, comprenant un carter d'échappement 10, un mélangeur 20, et un cône d'échappement 30. Un tel ensemble de turbomachine est connu par le document WO2013/163510 A1.

Le carter d'échappement est une pièce de révolution autour d'un axe (non représenté) de la turbomachine se trouvant immédiatement en aval d'une turbine basse pression TuBP de la turbomachine, par rapport au sens d'écoulement de l'air dans la turbomachine.

Le carter d'échappement 10 comprend une virole interne 11 et une virole externe 12, ces deux viroles étant des pièces cylindriques de révolution s'étendant l'une à l'intérieur de l'autre de manière concentrique autour de l'axe de la turbomachine.

Le carter d'échappement comprend en outre une pluralité de bras radiaux 13 s'étendant entre la virole interne 11 et la virole externe 12.

Le mélangeur 20 est une pièce composée d'une bride circulaire de fixation à laquelle est soudée une pièce en tôle de forme annulaire à lobes. Le mélangeur 20 est une pièce annulaire centrée sur l'axe de la turbomachine, rapportée sur la virole externe du carter, en aval de celui-ci. Dans une turbomachine à double-flux, le mélangeur 20 est la pièce au niveau de laquelle le flux primaire et le flux secondaire sont mélangés. Il présente, pour optimiser ce mélange, une section dans un plan orthogonal à l'axe de révolution présentant une forme globalement circulaire et formant des ondulations.

En variante, le mélangeur peut être remplacé par une tuyère d'échappement dépourvue de lobes.

Le cône d'échappement 30 est également une pièce annulaire centré sur l'axe de turbomachine, présentant une forme de cône dont l'extrémité ouverte est rapportée sur la virole interne du carter d'échappement, en aval de celui-ci.

Le flux d'air en sortie du carter d'échappement 10 circule donc entre le cône d'échappement 30 et la tuyère ou le mélangeur 20.

Comme visible sur la figure 1, le mélangeur et le cône d'échappement sont fixés sur les viroles respectives du carter d'échappement par boulonnage.

A cet égard, chaque virole comprend une bride festonnée dédiée uniquement à cet assemblage.

La figure 2a représente une vue de l'assemblage du mélangeur 20 sur le carter d'échappement. La virole externe du carter comprend une bride festonnée 15 orientée sensiblement axialement par rapport à l'axe de la turbomachine, l'orientation d'une bride étant définie par l'orientation des boulons permettant son assemblage. Chaque feston comprend un orifice traversant permettant le boulonnage du mélangeur. De même, le mélangeur 20 comprend une bride festonnée 21 correspondant à la bride 15 du carter d'échappement.

La figure 2b représente une vue de l'assemblage du cône d'échappement 30 sur le carter d'échappement 10. La virole interne du carter comprend également une bride festonnée 16 sensiblement radiale. Chaque feston comporte également un orifice traversant pour boulonner le cône d'échappement.

De manière analogue, une section circonférentielle 31 du cône d'échappement comprend des orifices permettant son boulonnage au carter d'échappement. De plus, cette section comprend une surépaisseur comportant les festonnages radiaux afin de noyer les têtes des vis et de garantir la tenue mécanique de la liaison.

L'ensemble des boulons et des ajouts de matières (festons, surépaisseur) induit une masse pour l'ensemble des pièces qui peut être sensiblement optimisée.

### DESCRIPTION DE L'INVENTION

Un des buts de l'invention est de proposer une alternative à une liaison par boulonnage d'un carter d'échappement à un cône d'échappement, un mélangeur, ou une tuyère d'échappement, permettant une économie de masse de ces pièces.

A cet égard, l'invention a pour objet un ensemble selon la revendication 1.

Avantageusement, mais facultativement, l'ensemble selon l'invention peut en outre comprendre au moins l'une des caractéristiques suivantes :
- Le filetage de la virole du carter peut être réalisé sur une surface radialement externe de la virole.
- La gorge peut être circonférentielle.
- La pièce annulaire peut être un mélangeur ou une tuyère d'échappement rapporté(e) sur la virole externe du carter d'échappement.
- La pièce annulaire peut être un cône d'échappement rapporté sur la virole interne du carter d'échappement.
- Chaque vis peut en outre être conformée pour pouvoir être intégralement contenue dans un volume constitué par un orifice du cône d'échappement et la gorge du carter d'échappement.

L'invention a également pour objet une turbomachine, comprenant un ensemble selon la description qui précède.

L'invention peut également avoir pour objet un carter d'échappement, un mélangeur, une tuyère d'échappement ou un cône d'échappement faisant partie de l'ensemble décrit ci-avant.

L'ensemble proposé permet une réduction de masse de l'ordre de 500 g par rapport à l'art antérieur. En effet, les festons et boulons sont supprimés et remplacés par un filetage. Dans le cas où la pièce est un cône d'échappement, la surépaisseur nécessaire pour le boulonnage du cône d'échappement est également supprimée.

Le filetage est une solution bien adaptée pour ce type de liaison vis-à-vis des sollicitations mécaniques subies par la liaison.

Le filetage présente en outre un avantage de faciliter la fabrication et la maintenance de l'ensemble, réduisant ainsi son coût de production et d'entretien.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1, déjà décrite, représente un ensemble de turbomachine comprenant un carter d'échappement selon l'art antérieur,
- Les figures 2a et 2b, déjà décrites également, sont des vues du détail de l'assemblage d'un carter d'échappement respectivement à un mélangeur et à un cône d'échappement selon l'art antérieur.
- Les figures 3a et 3b illustrent un carter d'échappement selon deux variantes de réalisation de l'invention,
- Les figures 4a et 4b illustrent un mélangeur d'un ensemble selon un mode de réalisation de l'invention,
- Les figures 5a et 5b illustrent un cône d'échappement d'un ensemble selon un mode de réalisation de l'invention,
- La figure 6a est une vue en coupe de l'assemblage d'un cône d'échappement sur un carter d'échappement,
- La figure 6b est une vue en coupe de l'assemblage d'une tuyère ou d'un mélangeur sur un carter d'échappement.

### DESCRIPTION DETAILLEE D'AU MOINS UN MODE DE REALISATION DE L'INVENTION

On va maintenant décrire au moins un ensemble 1 de turbomachine conforme à un mode de réalisation de l'invention.

L'ensemble 1 comprend un carter d'échappement 110, le carter d'échappement étant une pièce de révolution autour d'un axe X-X de la turbomachine. L'ensemble 1 comprend en outre au moins une pièce annulaire vissée sur le carter d'échappement d'un côté aval du carter d'échappement par rapport à un flux d'air dans la turbomachine - la pièce étant axée sur l'axe X-X lorsqu'elle est montée sur le carter d'échappement.

La pièce annulaire peut être soit une tuyère ou un mélangeur 120, dans le cas où la turbomachine est à double-flux, soit un cône d'échappement 130.

Selon une variante avantageuse, l'ensemble 1 comprend un carter d'échappement 110, un cône d'échappement 130, ainsi qu'une tuyère ou un mélangeur 120 vissés sur le carter 110.

On va décrire plus en détails les différents composants de l'ensemble.

### Carter d'échappement

Le carter d'échappement 110 comprend une virole interne 111 et une virole externe 112, ces deux viroles étant des pièces cylindriques de révolution s'étendant l'une à l'intérieur de l'autre de manière concentrique autour de l'axe X-X de la turbomachine.

Le carter d'échappement comprend en outre une pluralité de bras radiaux 113 par rapport à l'axe X-X de la turbomachine, s'étendant entre la virole interne 111 et la virole externe 112.

Le carter d'échappement 110 comprend en outre au moins un filetage circonférentiel, 114, 115, agencé respectivement dans une surface de la virole interne 111 et/ou de la virole externe 112.

Avantageusement, le filetage 114, 115 est réalisé dans une surface radialement externe 111*, 112* de la virole correspondante, à proximité d'un bord aval de ladite surface.

Chaque filetage circonférentiel permet le montage par vissage d'une pièce annulaire respective. Le filetage s'étend ainsi sur une pluralité de tours de chaque virole, de préférence entre 2 et 10 tours, par exemple sur 4, 5 ou 6 tours.

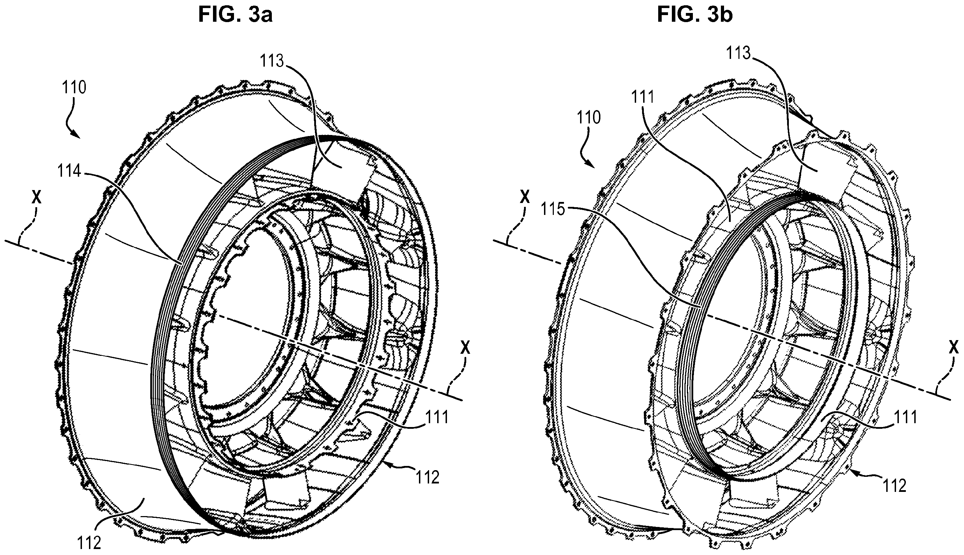

Ainsi, en référence à la figure 3a, le carter d'échappement 110 comprend, sur une surface externe 112* de la virole externe 112, un filetage circonférentiel 114, ce filetage permettant le montage par vissage d'une tuyère d'échappement ou d'un mélangeur 120 sur la virole externe 112 du carter d'échappement 110.

En référence à la figure 3b, le carter d'échappement comprend, sur la surface externe 111* de la virole interne 111, un filetage circonférentiel 115, ce filetage permettant le montage par vissage d'un cône d'échappement 130 sur la virole interne 111 du carter d'échappement 110.

Avantageusement, le carter d'échappement 110 comprend deux filetages 114, 115 réalisés sur les viroles externe 112 et interne 111, de manière à pouvoir visser un mélangeur ou une tuyère d'échappement sur la virole externe et un cône d'échappement sur la virole interne. Dans ce cas, le cône d'échappement 130 s'étend à l'intérieur de la tuyère d'échappement ou du mélangeur 120, de manière coaxiale.

Si le carter d'échappement 110 comporte un filetage sur une virole interne ou externe, la bride festonnée utilisée auparavant pour le montage de la pièce aval correspondante par boulonnage est supprimée.

### Tuyère d'échappement ou mélangeur

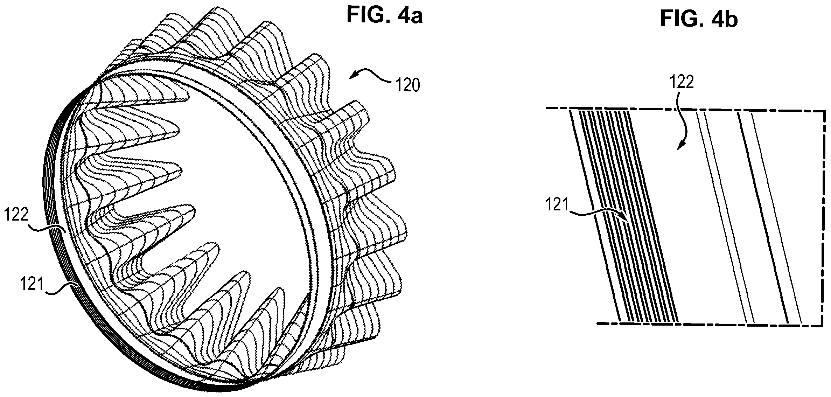

En référence aux figures 4a et 4b, la pièce annulaire pouvant être vissée sur le carter d'échappement peut être un mélangeur 120ou une tuyère d'échappement.

Pour permettre le vissage de la tuyère ou du mélangeur sur la virole externe 112 du carter, celui-ci comporte également un filetage circonférentiel 121. Le filetage 121 est adapté pour coopérer avec le filetage 114 de la virole externe 112 du carter d'échappement 110. A cet égard, le filetage circonférentiel du mélangeur ou de la tuyère 120 est de préférence réalisé sur une surface radialement interne 122 de celui/celle-ci, pour coopérer avec un filetage 114 agencé sur une surface radialement externe 112* de la virole 112.

### Cône d'échappement

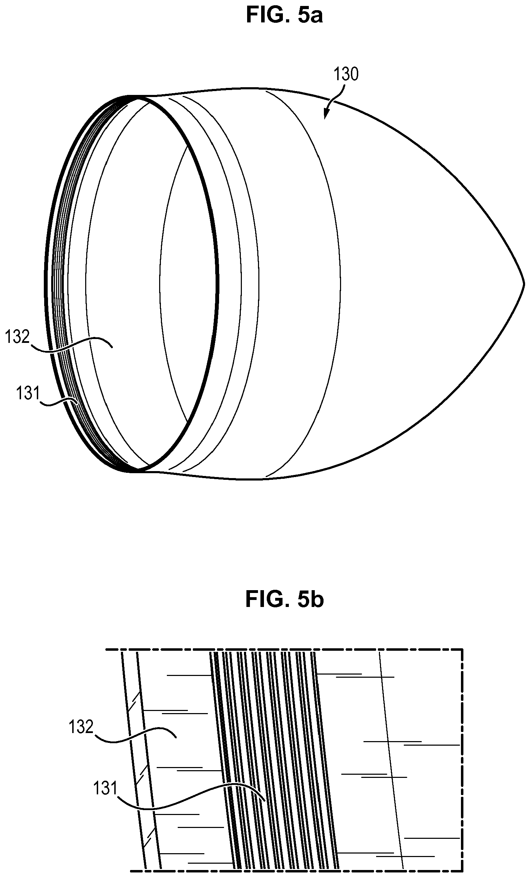

En référence aux figures 5a et 5b, la pièce annulaire pouvant être vissée sur le carter d'échappement peut être un cône d'échappement 130.

Pour permettre le vissage du cône d'échappement 130 sur la virole interne 111 du carter d'échappement, celui-ci comporte également un filetage circonférentiel 131. Le filetage 131 est adapté pour coopérer avec le filetage 115 de la virole interne du carter d'échappement 110. A cet égard, si le filetage 115 est réalisé sur une surface externe 111* de la virole du carter, le filetage 131 est réalisé sur une surface radialement interne 132 du cône d'échappement 130.

De préférence, les filetages 114, 115 du carter d'échappement 110 ainsi que le ou les filetages 121, 131 de la tuyère/du mélangeur et 120 /ou du cône d'échappement 130 sont adaptés pour autoriser un bon indexage angulaire de la pièce aval 120, 130 par rapport au carter d'échappement 110.

Par exemple, la tuyère, le mélangeur ainsi que le cône d'échappement peuvent présenter un ou plusieurs orifices de drainage qui doivent être situés en position basse lorsque la pièce est montée sur le carter, c'est-à-dire sensiblement à la verticale en-dessous de l'axe de la turbomachine (« à 6 heures »).

Les filetages du carter d'échappement 110 et de la pièce aval à indexer angulairement doivent donc être adaptés pour autoriser ce positionnement, en choisissant précisément la position angulaire du démarrage de chaque filetage sur chaque pièce. Pour ce faire, chaque filetage est de préférence réalisé par fraisage.

### Arrêt en translation

Avantageusement, l'ensemble 1 comprend en outre un système d'arrêt 140 en translation axiale de la pièce aval sur le carter d'échappement. Dans le cas où l'ensemble 1 comprend un mélangeur ou une tuyère d'échappement 120 et un cône d'échappement 130 vissés sur le carter d'échappement, le système d'arrêt 140 est applicable à la fois à l'arrêt en translation du cône d'échappement 130 par rapport au carter 110 et du mélangeur ou de la tuyère 120 par rapport au carter 110.

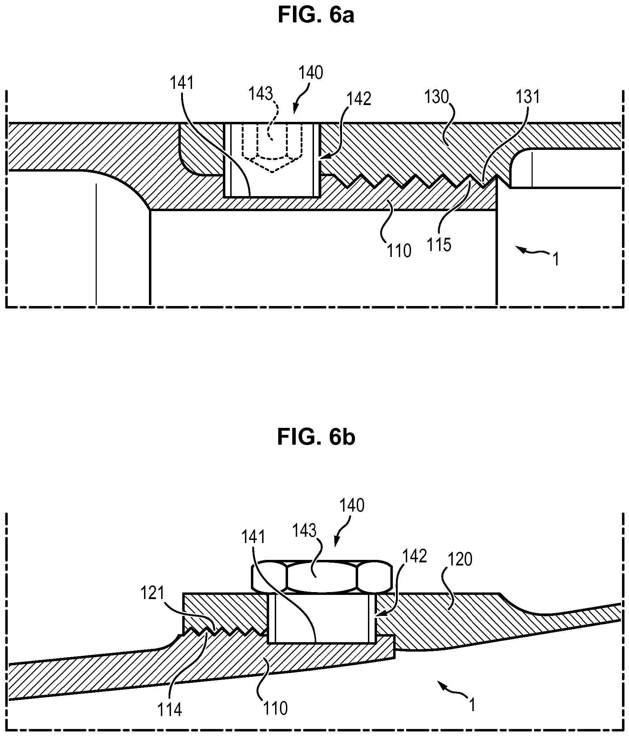

Le système d'arrêt en translation axiale est représenté sur la figure 6a, dans le cas où la pièce aval est un cône d'échappement 130, et sur la figure 6b, dans le cas où il s'agit d'une tuyère d'échappement ou d'un mélangeur 120.

Le système d'arrêt en translation 140 comprend avantageusement une gorge 141 réalisée de façon adjacente au filetage 114 ou 115 du carter d'échappement, c'est-à-dire sur la surface externe respectivement de la virole externe 112 et/ou de la virole interne 111 du carter d'échappement.

La gorge 141 est de préférence circonférentielle. Alternativement, la gorge 141 peut comprendre une pluralité de sections en secteur de cercle. Selon une autre alternative, néanmoins moins avantageuse pour des raisons de fabricabilité, la gorge 141 peut être remplacée par des usinages localisés, disposés aux endroits précis de localisation des vis.

En outre, le système d'arrêt en translation 140 comprend au moins un orifice 142 traversant, pratiqué dans la paroi circonférentielle de la pièce aval portant le filetage 131, 132. Chaque orifice traversant 142 est fileté.

De préférence, chaque pièce aval (mélangeur ou tuyère 120 ou cône d'échappement 130) comporte une pluralité d'orifices traversants 142 disposés régulièrement sur la circonférence de la paroi portant le filetage. Par exemple, la pièce aval peut comprendre trois orifices traversants 142 répartis à un intervalle angulaire constant de 120°.

Les emplacements des orifices 142 sont choisis pour que les orifices se trouvent en regard de la gorge 141 du carter d'échappement lorsque la pièce annulaire est vissée sur le carter 110.

Enfin, le système d'arrêt en translation axial 140 comprend une pluralité de vis 143 adaptées pour être vissées dans les orifices 142. Chaque vis est ainsi reçue dans un orifice 142 jusqu'à émerger dans la gorge 141. L'extrémité de la vis logée dans la gorge vient en butée contre les rebords de la gorge et empêche une translation axiale de la pièce aval par rapport au carter d'échappement.

De préférence comme visible sur la figure 6a, lorsque la pièce aval est un cône d'échappement 130, chaque vis 143 est conformée de manière à être intégralement contenue dans un volume constitué par un orifice 142 du cône d'échappement et la gorge 141 du carter d'échappement, de manière à ne pas saillir par rapport à la paroi du cône d'échappement 130.

En effet, lorsque la vis est disposée dans un orifice, la tête de la vis se trouve au niveau d'une surface radialement externe du cône d'échappement. Or, comme l'écoulement d'air dans la turbomachine a lieu entre la tuyère d'échappement/le mélangeur et le cône d'échappement, le fait que la tête de la vis se trouve en saillie par rapport au cône d'échappement impacterait défavorablement l'écoulement d'air entre le cône d'échappement et le mélangeur ou la tuyère.

Les vis utilisées peuvent être de type à tête à empreinte femelle dite BTR ou à tête bombée.

Le remplacement d'une liaison par boulonnage par une liaison par vissage permet de réduire la masse de l'ensemble. De préférence, pour réduire la masse de façon plus importante, à la fois le cône d'échappement et la tuyère ou le mélangeur sont conformés pour pouvoir être vissés sur le carter d'échappement.

## Revendications

1. Ensemble (1) comprenant :
- un carter d'échappement (110) de turbomachine, comprenant deux viroles respectivement interne (111) et externe (112) s'étendant l'une à l'intérieur de l'autre de manière concentrique autour d'un axe (X-X) de turbomachine, et une pluralité de bras (113) s'étendant radialement entre les viroles, et
- une pièce annulaire (120, 130) centrée sur l'axe, rapportée sur une virole du carter d'échappement (110), en aval dudit carter par rapport à un écoulement d'air dans la turbomachine,
dans lequel la pièce annulaire (120, 130) et la virole (111, 112) du carter sur laquelle elle est rapportée comportent chacune un filetage circonférentiel (121, 131, 114, 115), lesdits filetages coopérant pour autoriser un montage par vissage de la pièce annulaire sur la virole du carter,
l'ensemble comprenant en outre un système d'arrêt (140) en translation axiale de la pièce annulaire (120, 130) sur la virole (111, 112) du carter (110), lequel système d'arrêt en translation axiale (140) comprenant au moins une gorge (141) agencée dans la virole du carter d'échappement en étant adjacente au filetage ainsi qu'une pluralité d'orifices (142) traversants filetés agencés sur la pièce annulaire (120, 130) et adaptés pour se trouver en regard de la gorge (141) lorsque la pièce est vissée sur le carter d'échappement, et une pluralité de vis adaptées (143) pour être vissées dans les orifices (142).

2. Ensemble selon la revendication 1, dans lequel le filetage (114, 115) de la virole (111, 112) du carter est réalisé sur une surface radialement externe (111*, 112*) de la virole.

3. Ensemble selon l'une des revendications 1 et 2, dans lequel la gorge (141) est circonférentielle.

4. Ensemble selon l'une des revendications précédentes, dans lequel la pièce annulaire est un mélangeur ou une tuyère d'échappement (120) rapporté(e) sur la virole externe (112) du carter d'échappement (110).

5. Ensemble selon l'une des revendications 1 à 3, dans lequel la pièce annulaire est un cône d'échappement (130) rapporté sur la virole interne (111) du carter d'échappement (110).

6. Ensemble selon la revendication 5, dans lequel chaque vis (143) est en outre conformée pour pouvoir être intégralement contenue dans un volume constitué par un orifice (142) du cône d'échappement et la gorge (141) du carter d'échappement.

7. Turbomachine, comprenant un ensemble (1) selon l'une des revendications précédentes.

## Patentansprüche

1. Anordnung (1), umfassend:
- ein Auslassgehäuse (110) eines Turbinentriebwerks, umfassend zwei Ringe, jeweils einen inneren Ring (111) und einen äußeren Ring (112), die sich, der eine im Inneren des anderen, konzentrisch um eine Achse (X-X) des Turbinentriebwerks erstrecken, und eine Vielzahl von Armen (113), die sich radial zwischen den Ringen erstrecken, und
- ein auf der Achse zentriertes ringförmiges Teil (120, 130), das auf einem Ring des Auslassgehäuses (110) in Bezug auf einen Luftstrom in dem Turbinentriebwerk dem Gehäuse nachgelagert angebracht ist,
wobei das ringförmige Teil (120, 130) und der Ring (111, 112) des Gehäuses, auf dem es angebracht ist, jeweils ein Umfangsgewinde (121, 131, 114, 115), aufweisen, wobei die Gewinde zusammenwirken, um eine Montage durch Schrauben des ringförmigen Teils auf den Ring des Gehäuses zu gestatten,
wobei die Anordnung ferner ein Sperrsystem (140) der axialen Verlagerung des ringförmigen Teils (120, 130) auf dem Ring (111, 112) des Gehäuses (110) umfasst, wobei das Sperrsystem der axialen Verlagerung (140) mindestens eine Nut (141) umfasst, die in dem Ring des Auslassgehäuses in Nachbarschaft zum Gewinde ausgebildet ist, sowie eine Vielzahl gewindeter durchgängiger Öffnungen (142), die auf dem ringförmigen Teil (120, 130) ausgebildet und geeignet sind, sich der Nut (141) zugewandt zu befinden, wenn das Teil auf dem Auslassgehäuse geschraubt ist, und eine Vielzahl von Schrauben (143), die zum Schrauben in den Öffnungen (142) geeignet sind.

2. Anordnung nach Anspruch 1, wobei das Gewinde (114, 115) des Rings (111, 112) des Gehäuses auf einer radial äußeren Fläche (111*, 112*) des Rings ausgeführt ist.

3. Anordnung nach einem der Ansprüche 1 und 2, wobei die Nut (141) umfänglich ist.

4. Anordnung nach einem der vorangehenden Ansprüche, wobei das ringförmige Teil ein Mischer oder eine Auslassdüse (120) ist, der/die auf dem äußeren Ring (112) des Auslassgehäuses (110) angebracht ist.

5. Anordnung nach einem der Ansprüche 1 bis 3, wobei das ringförmige Teil ein Austrittskegel (130) ist, der auf dem inneren Ring (111) des Auslassgehäuses (110) angebracht ist.

6. Anordnung nach Anspruch 5, wobei jede Schraube (143) ferner ausgebildet ist, um vollständig in einem Volumen enthalten zu sein, das von einer Öffnung (142) des Austrittskegels und der Nut (141) des Auslassgehäuses gebildet ist.

7. Turbinentriebwerk, umfassend eine Anordnung (1) nach einem der vorangehenden Ansprüche.

## Claims

1. An assembly (1) comprising:
- a turbomachine exhaust case (110), comprising two shrouds, respectively inner (111) and outer (112), extending one inside the other concentrically around a turbomachine axis (X-X), and a plurality of arms (113) extending radially between the shrouds, and
- an annular part (120, 130) centered on the axis, mounted on a shroud of the exhaust case (110), downstream of said case with respect to an air flow in the turbomachine,
wherein that the annular part (120, 130) and the shroud (111, 112) of the case on which it is mounted each include a circumferential thread (121, 131, 114, 115), said threads cooperating to allow mounting by screwing of the annular part on the shroud of the case,
the assembly further comprising a stopping system (140) in axial translation of the annular part (120, 130) on the shroud (111, 112) of the case (110), said stopping system (140) in axial translation comprising at least one groove (141) arranged in the shroud of the exhaust case while being adjacent to the thread and a plurality of threaded through openings (142) arranged on the annular part (120, 130) and suitable for being located facing the groove (141) when the part is screwed on the exhaust case, and a plurality of screws (143) suitable for being screwed into the openings (142).

2. The assembly according to claim 1, wherein the thread (114, 115) of the shroud (111, 112) of the case is made on a radially outer surface (111*, 112*) of the shroud.

3. The assembly according to one of claims 1 and 2, wherein the groove (141) is circumferential.

4. The assembly according to one of the preceding claims, wherein the annular part is a mixer or an exhaust nozzle (120) mounted on the outer shroud (112) of the exhaust case (110).

5. The assembly according to one of claims 1 to 3, wherein the annular part is an exhaust cone (130) mounted on the inner shroud (111) of the exhaust case (110).

6. The assembly according to claim 5, wherein each screw (143) is further formed to be able to be integrally contained in a volume consisting of an opening (142) of the exhaust cone and the groove (141) of the exhaust case.

7. A turbomachine, comprising an assembly (1) according to one of the preceding claims.
